# EUROPÄISCHE PATENTSCHRIFT

(11) **EP 2 050 600 B1**
(45) Veröffentlichungstag und Bekanntmachung des Hinweises auf die Patenterteilung: **15.09.2010**
(21) Anmeldenummer: 08018151.4
(22) Anmeldetag: 16.10.2008
(51) Int. Cl.: B60H 1/24

(54) **Entlüftungsvorrichtung**
Air venting device
Dispositif d'évacuation d'air

(30) Priorität: 19.10.2007 DE 202007014663 U
(43) Veröffentlichungstag der Anmeldung: 22.04.2009
(73) Patentinhaber: TRW Automotive Electronics & Components GmbH, 78315 Radolfzell (DE)
(72) Erfinder: Loewe, Hubert, 66919 Weselberg (DE)
(74) Vertreter: Prinz & Partner

(56) Entgegenhaltungen:
- EP-A- 1 026 021
- DE-A1- 19 845 746
- US-A- 5 263 895
- US-A- 6 026 852
- US-A1- 2003 017 799

## Beschreibung

Die Erfindung betrifft eine Entlüftungsvorrichtung, insbesondere zur Entlüftung eines Fahrzeuginnenraums, mit einem Rahmen aus einer ersten Materialkomponente und einem Rückschlagklappenelement aus einer zweiten Materialkomponente, wobei die erste Materialkomponente härter ist als die zweite Materialkomponente.

Eine Entlüftungsvorrichtung ermöglicht es, die über ein Lüftungssystem dem Fahrzeuginnenraum zugeführte Luft abzuführen. Die Entlüftungsvorrichtung hat einen Rahmen, der wenigstens eine Rückschlagklappe aufnimmt. Wenn keine Luft aus dem Fahrzeuginnenraum ausströmt, liegt die Rückschlagklappe am Rahmen an, so daß ein Eindringen von Feuchtigkeit, Abgas oder Schmutz in den Fahrzeuginnenraum verhindert ist. Es ist bekannt, derartige Entlüftungsvorrichtungen aus zwei Komponenten herzustellen, wobei der Rahmen aus einer härteren Materialkomponente besteht, während die Rückschlagklappe aus einer weicheren Materialkomponente gebildet ist. Wenn im Fahrzeuginnenraum ein höherer Druck herrscht als in der Umgebung des Fahrzeugs, bewegt sich die Rückschlagklappe in eine Stellung, in der die Luft aus dem Fahrzeuginnenraum ausströmen kann. Dadurch sinkt der Druck im Fahrzeuginnenraum, und die Rückschlagklappe bewegt sich zum Rahmen hin, um zu verhindern, daß Feuchtigkeit, Abgas oder Schmutz in den Fahrzeuginnenraum eindringt. Beim Schließen der Rückschlagklappe prallt diese an den Rahmen, der aus einem härteren Material als die Rückschlagklappe selbst ist. Dabei entstehen Geräusche, die für einen Fahrzeuginsassen störend sind.

Nachteilig an bekannten Entlüftungsvorrichtungen ist ferner, daß diese nicht von der Fahrzeugkarosserie entkoppelt sind, so daß Schwingungen, die aus der Bewegung der Rückschlagklappe resultieren, auf die Fahrzeugkarosserie übertragen werden können.

EP 1 026 021 offenbart eine Entlüftungsvorrichtung nach dem Oberbegriff des Anspruchs 1.

Die Aufgabe der Erfindung besteht darin, eine Entlüftungsvorrichtung bereitzustellen, die mit geringem Aufwand herzustellen ist und sich durch eine gute Funktionalität (Klapperfreiheit, Schwingungsentkoppelung usw.) auszeichnet.

Dies wird bei einer Entlüftungsvorrichtung eingangs genannter Art dadurch erreicht, daß die Entlüftungsvorrichtung wenigstens eines der folgenden Merkmale aufweist:
a) das Rückschlagklappenelement weist eine bewegliche Rückschlagklappe auf, die so angeordnet ist, daß sie ausschließlich am Rückschlagklappenelement anliegt;
b) die Entlüftungsvorrichtung ist an einem Fahrzeugteil anbringbar, wobei der Teil der Entlüftungsvorrichtung, der am Fahrzeugteil angreift, Teil des Rückschlagklappenelementes ist.

Erfindungsgemäß ist die Rückschlagklappe, die Teil des Rückschlagklappenelementes ist, so angeordnet, daß sie in keiner Stellung direkt am Rahmen anliegt, d.h. in der geschlossenen Stellung, in der die Rückschlagklappe ein Eindringen von Feuchtigkeit, Abgas oder Schmutz in einen Fahrzeuginnenraum verhindert, liegt sie nicht am Rahmen an. Die Rückschlagklappe schlägt also beim Schließen derselben nicht an das härtere Material des Rahmens an, was störende Geräusche verursachen würde. Vielmehr prallt die Rückschlagklappe auf das weichere Material des Rückschlagklappenelements. Dadurch werden störende Geräusche verhindert. Die Erfindung berücksichtigt ferner, daß die Entlüftungsvorrichtung von einem Fahrzeugteil, an dem sie angebracht ist, entkoppelt ist. Erfindungsgemäß greift die Entlüftungsvorrichtung nämlich mit einem Teil an dem Fahrzeugteil an, das aus der weicheren Materialkomponente ist. Die Entlüftungsvorrichtung ist somit vom Fahrzeugteil, das insbesondere ein Blechteil ist, entkoppelt. Aufgrund der Entkoppelung der Entlüftungsvorrichtung zum Fahrzeugteil werden keine Schwingungen, die aus der Bewegung der Rückschlagklappe resultieren, auf das Fahrzeugteil übertragen.

Vorzugsweise weist das Rückschlagklappenelement Vorsprünge auf, an denen die Rückschlagklappe angreifen kann. Die Rückschlagklappe liegt im geschlossenen Zustand an den Vorsprüngen an, die aus der weicheren Materialkomponente gebildet sind.

Die Vorsprünge sind insbesondere über die Breite des Rückschlagklappenelementes verteilt. Die Rückschlagklappe liegt so an mehreren, voneinander beabstandeten Punkten an.

Vorzugsweise weist das Rückschlagklappenelement wenigstens eine Lippe auf, die der Anbringung des Rückschlagklappenelementes am Fahrzeugteil dient. Insbesondere ist eine geschlossen umlaufende Lippe und mehrere voneinander beabstandete, gekrümmte Lippen vorgesehen, wobei das Fahrzeugteil zwischen der umlaufenden Lippe und den gekrümmten Lippen eingebracht und geklemmt werden kann.

Vorzugsweise dient die Lippe als Dichtlippe. Die geschlossen umlaufende Lippe dichtet nach dem Einsetzen der Entlüftungsvorrichtung in eine Öffnung des Fahrzeugteils zwischen der Entlüftungsvorrichtung und dem Fahrzeugteil ab.

Gemäß einer Ausführungsform weist die Rückschlagklappe Verstärkungsrippen auf, wobei sich die Verstärkungsrippen in Längsrichtung bis zu wenigstens einem Rand der Rückschlagklappe erstrecken. Die Verstärkungsrippen versteifen die Rückschlagklappe und verhindern ein Flattern derselben. Ein Flattern der Rückschlagklappe könnte störende Geräusche verursachen.

Gemäß einer weiteren Ausführungsform weist die Rückschlagklappe Verstärkungsrippen auf, wobei die Verstärkungsrippen, in Längsrichtung gesehen, in einem Abstand von einem Rand enden. Die Verstärkungsrippen, die der Versteifung der Rückschlagklappe dienen und somit ein Flattern derselben verhindern, erstrecken sich nicht bis zum Rand der Rückschlagklappe. Der Bereich des Rückschlagklappenelementes, an dem die Rückschlagklappe im geschlossenen Zustand anliegt, ist deshalb eben (d.h. ohne Erhebungen und Vertiefungen) ausgebildet.

Weitere Merkmale und Vorteile ergeben sich aus den Unteransprüchen.

Die Erfindung wird nachfolgend anhand von Ausführungsformen beschrieben, die in den Zeichnungen dargestellt sind. In den Zeichnungen zeigen:
- Figur 1 eine perspektivische Ansicht einer erfindungsgemäßen Entlüftungsvorrichtung mit einem Rahmen und einem Rückschlagklappenelement, wobei sich eine Rückschlagklappe in einer geöffneten Stellung befindet,
- Figur 2 eine perspektivische Ansicht der Entlüftungsvorrichtung von Figur 1, wobei sich die Rückschlagklappe in einer geschlossenen Stellung befindet,
- Figur 3 eine Schnittansicht der Entlüftungsvorrichtung entlang der Linie III-III in Figur 1,
- Figur 4 eine Schnittansicht der Entlüftungsvorrichtung entlang der Linie IV-IV in Figur 2 mit einem Fahrzeugteil,
- Figur 5 eine perspektivische Ansicht des Rückschlagklappenelementes, die Teil der Entlüftungsvorrichtung der Figuren 1 bis 4 ist, mit der Rückschlagklappe in der geöffneten Stellung,
- Figur 6 eine perspektivische Ansicht der Seite des Rückschlagklappenelements von Figur 5, die der Rückschlagklappe entgegengesetzt ist,
- Figur 7 eine perspektivische Ansicht des Rahmens, der Teil der Entlüftungsvorrichtung der Figuren 1 bis 6 ist,
- Figur 8 eine perspektivische Ansicht der Seite des Rahmens von Figur 7, die im eingebauten Zustand einem Fahrzeugteil zugewandt ist,
- Figur 9 eine perspektivische Ansicht einer erfindungsgemäßen Entlüftungsvorrichtung gemäß einer zweiten Ausführungsform mit dem Rahmen und dem Rückschlagklappenelement, wobei sich die Rückschlagklappe in einer geöffneten Stellung befindet,
- Figur 10 eine perspektivische Ansicht der Entlüftungsvorrichtung von Figur 9 mit der Rückschlagklappe in der geschlossenen Stellung,
- Figur 11 eine perspektivische Ansicht des Rückschlagklappenelements, die Teil der Entlüftungsvorrichtung der Figuren 9 und 10 ist, mit der Rückschlagklappe in der geöffneten Stellung,
- Figur 12 eine perspektivische Ansicht der Seite des Rückschlagklappenelements von Figur 11, die der Rückschlagklappe entgegengesetzt ist,
- Figur 13 eine perspektivische Ansicht des Rahmens, der Teil der Entlüftungsvorrichtung der Figuren 9 bis 12 ist, und
- Figur 14 eine perspektivische Ansicht der Seite des Rahmens, die im eingebauten Zustand einem Fahrzeugteil zugewandt ist.

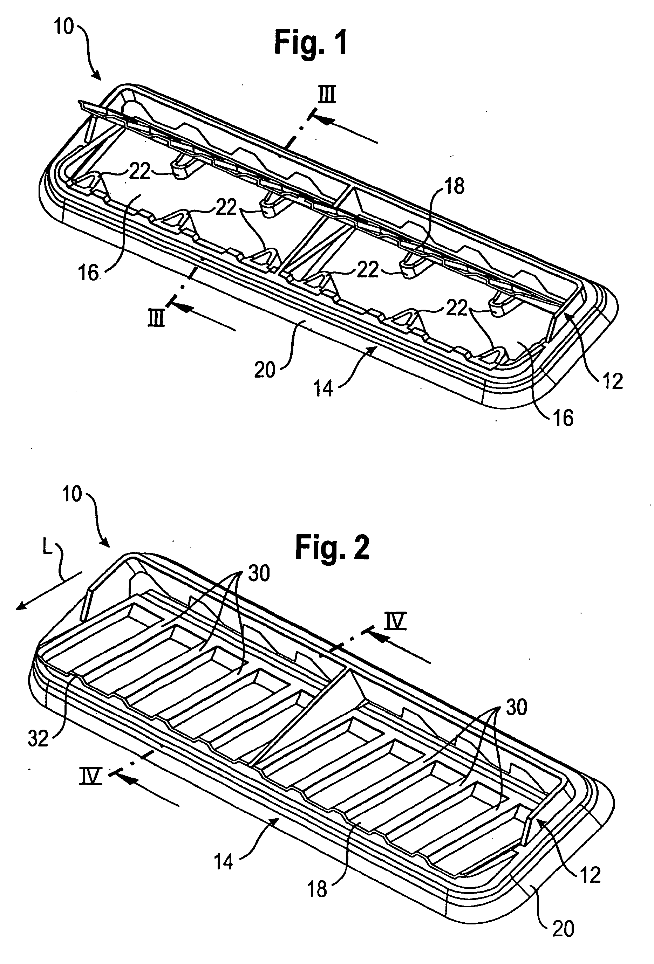

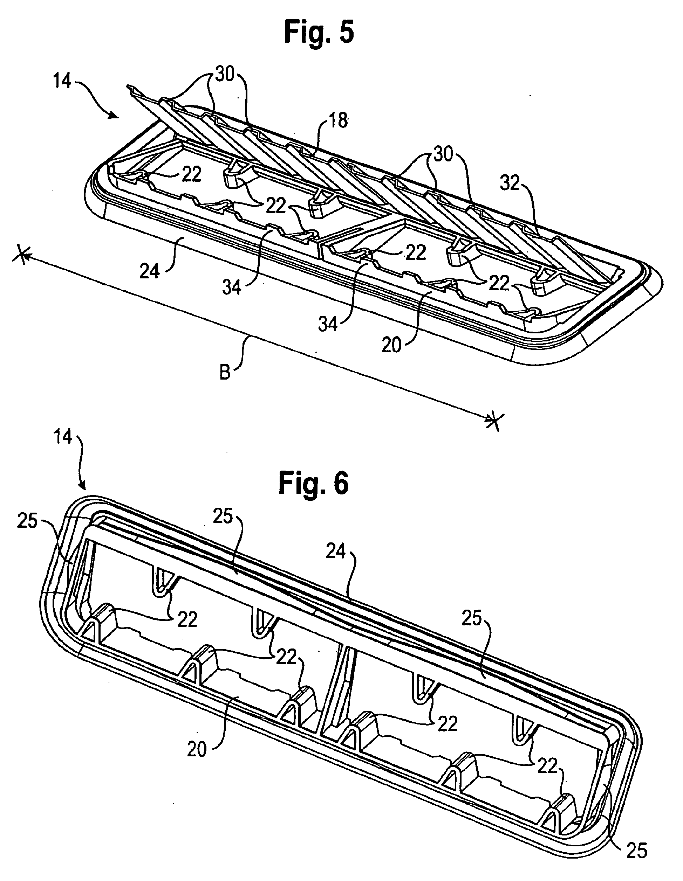

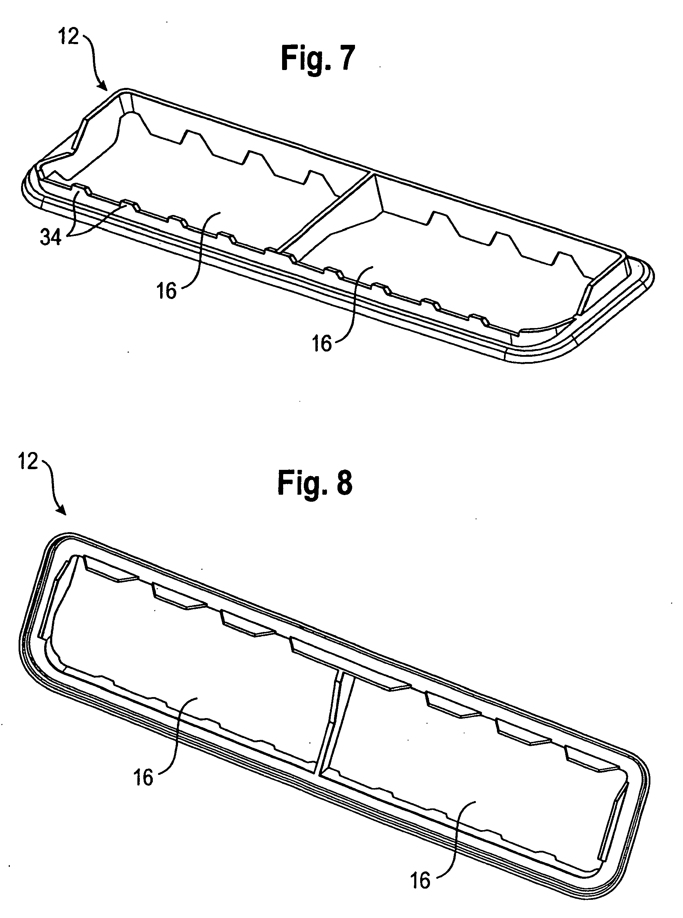

In den Figuren 1 bis 8 ist eine Entlüftungsvorrichtung 10 gemäß einer ersten Ausführungsform gezeigt. Die Entlüftungsvorrichtung 10 besteht aus einem Rahmen 12 (siehe insbesondere Figuren 7 und 8) aus einer ersten Materialkomponente und einem Rückschlagklappenelement 14 (siehe insbesondere Figuren 5 und 6) aus einer zweiten Materialkomponente. Die erste Materialkomponente, aus der der Rahmen 12 hergestellt ist, ist härter als die zweite Materialkomponente, aus der das Rückschlagklappenelement 14 gebildet ist. Der Rahmen 12 dient also der Verstärkung der Entlüftungsvorrichtung 10.

Der Rahmen 12 ist gitterförmig ausgebildet und weist zwei Ausströmöffnungen 16 auf. Die Ausströmöffnungen 16 können von einer Rückschlagklappe 18, die Teil des Rückschlagklappenelementes 14 ist, abgedeckt oder verschlossen werden.

Das Rückschlagklappenelement 14 besteht aus einem gitterförmigen Rahmenteil 20 und der Rückschlagklappe 18. Das gitterförmige Rahmenteil 20 hat zwei Ausströmöffnungen, die den Ausströmöffnungen 16 des Rahmens 12 entsprechen und im zusammengebauten Zustand zu diesen ausgerichtet sind.

Über die Breite B des Rahmenteils 20 sind Vorsprünge 22 verteilt, die im Querschnitt gesehen dreieckförmig ausgebildet sind und jeweils mit ihrer Spitze voran in die Ausströmöffnungen 16 hineinragen. Die Vorsprünge 22 sind nicht als "Vollprofile" ausgebildet, damit sie der ausströmenden Luft weniger Widerstand entgegensetzen. Es sind (bezüglich Figur 5) oben vier Vorsprünge und (bezüglich Figur 6) unten sechs Vorsprünge vorgesehen, an denen die Rückschlagklappe 18 in ihrer geschlossenen Stellung anliegt. Insbesondere liegt die Rückschlagklappe 18 in ihrer geschlossenen Stellung ausschließlich an der weicheren Materialkomponente an.

Das Rückschlagklappenelement 14 weist eine geschlossen umlaufende Lippe 24 auf und mehrere, um den Umfang verteilte, gekrümmte, in Draufsicht gesehen teilellipsenförmige Lippen 25, die an der (bezüglich Figur 6) Unterseite des Rückschlagklappenelementes 14 vorgesehen sind. Figur 6 zeigt vier gekrümmte Lippen 25, wobei jeweils zwei an den kurzen Seiten und zwei an der langen Seite des Rückschlagklappenelementes 14 gezeigt sind. An der aufgrund der perspektivischen Ansicht nicht einsehbaren zweiten langen Seite des Rückschlagklappenelementes 14 sollen ebenfalls zwei gekrümmte Lippen 25 vorgesehen sein.

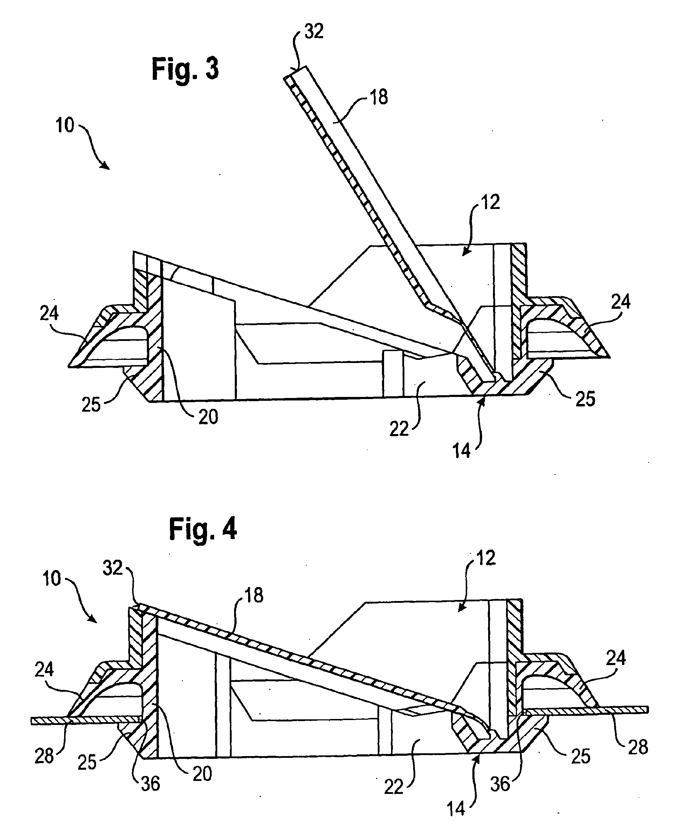

Zwischen der umlaufenden Lippe 24 und den gekrümmten Lippen 25 kann ein Fahrzeugteil 28 aufgenommen und eingeklemmt werden. In Figur 4 ist das Fahrzeugteil 28 zwischen den Lippen 24, 25 geklemmt. Das Fahrzeugteil 28 wird von der umlaufenden Lippe 24 und den gekrümmten Lippen 25 gehalten. Es greifen also nur Teile des Rückschlagklappenelementes 14 am Fahrzeugteil 28 an und keine Teile des Rahmens 12.

Die Lippe 24 dichtet nach Einsetzen der Entlüftungsvorrichtung 10 in das Fahrzeugteil 28 zwischen der Entlüftungsvorrichtung 10 und dem Fahrzeugteil 28 ab.

Die Rückschlagklappe 18, die Teil des Rückschlagklappenelementes 14 ist und aus der zweiten, weicheren Materialkomponente besteht, weist Verstärkungsrippen 30 auf, die in Längsrichtung L der Rückschlagklappe 18 vorgesehen sind und parallel zueinander sind. Die Verstärkungsrippen 30 erstrecken sich bis zu einem Rand 32 der Rückschlagklappe 18. Damit die Rückschlagklappe 18 ohne Spalt am Rahmenteil 20 anliegen kann, hat das Rahmenteil 20 eine den Verstärkungsrippen 30 entsprechende Kontur mit Vertiefungen und Erhöhungen, die mit dem Bezugszeichen 34 versehen ist.

Die Herstellung der Entlüftungsvorrichtung 10 erfolgt folgendermaßen: Der Rahmen 12, der der Verstärkung dient, wird aus einer ersten Materialkomponente hergestellt. Anschließend wird der Rahmen 12 mit dem Rückschlagklappenelement 14, das aus einer weicheren Materialkomponente als der Rahmen 12 ist, verbunden. Der Rahmen 12 und das Rückschlagklappenelement 14 können insbesondere im Zwei-Komponentenspritzgußverfahren hergestellt werden.

Die beiden Teile (Rahmen 12 und Rückschlagklappenelement 14) werden so verbunden, daß die Rückschlagklappe 18, die Teil des Rückschlagklappenelementes 14 ist ausschließlich am Rückschlagklappenelement 14 anliegt. D.h. die Rückschlagklappe 18 liegt nicht am Rahmen 12 an, sondern an einem Teil des Rückschlagklappenelementes 14, das aus demselben Material ist wie die Rückschlagklappe 18 selbst. Dadurch werden störende Geräusche beim Schließen der Rückschlagklappe 18 vermieden.

Die Entlüftungsvorrichtung 10 wird in eine Öffnung 36 eines Fahrzeugteils 28 eingesetzt und daran befestigt. Insbesondere wird das Fahrzeugteil 28 so positioniert, daß die Lippe 24 von (bezüglich Figur 4) oben am Fahrzeugteil 28 und die gekrümmten Lippen 25 von (bezüglich Figur 4) unten am Fahrzeugteil 28 angreifen und es klemmen. Die gekrümmten Lippen 25 sind im eingebauten Zustand einem Fahrzeuginnenraum zugewandt.

Das Fahrzeugteil 28 greift also nur am Rückschlagklappenelement 14 an, das aus einer Materialkomponente ist, die weicher als die Materialkomponente des Rahmens 12 ist. Die Entlüftungsvorrichtung 10 ist deshalb vom Fahrzeugteil 28 entkoppelt, so daß keine Schwingungen, die aus dem Öffnen und Schließen der Rückschlagklappe 18 resultieren, auf das Fahrzeugteil 28 übertragen werden.

Die Lippe 24 dichtet nach Einsetzen der Entlüftungsvorrichtung 10 in das Fahrzeugteil 28 zwischen der Entlüftungsvorrichtung 10 und dem Fahrzeugteil 28 ab.

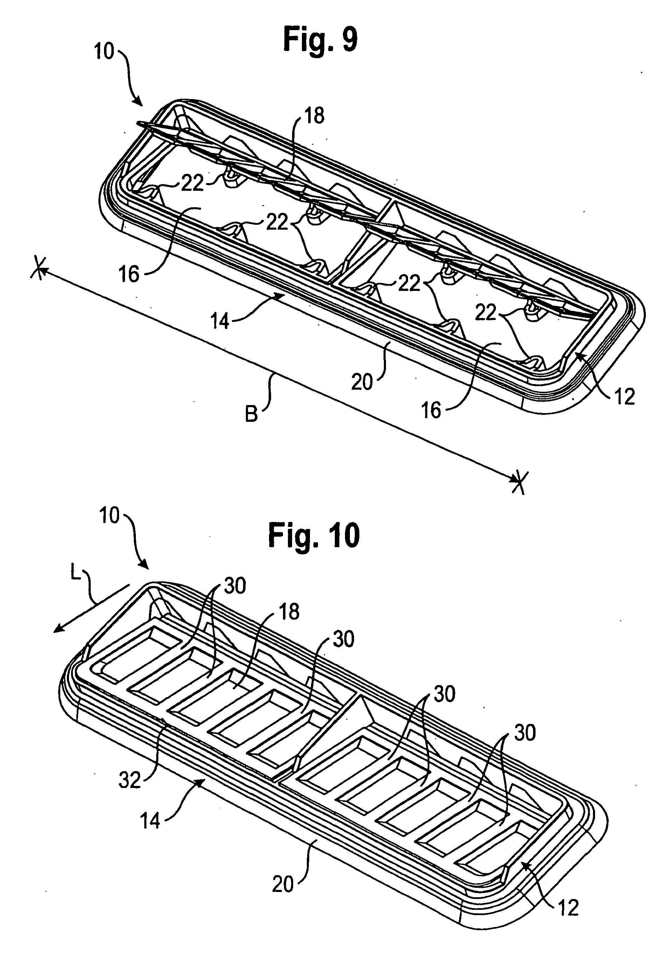

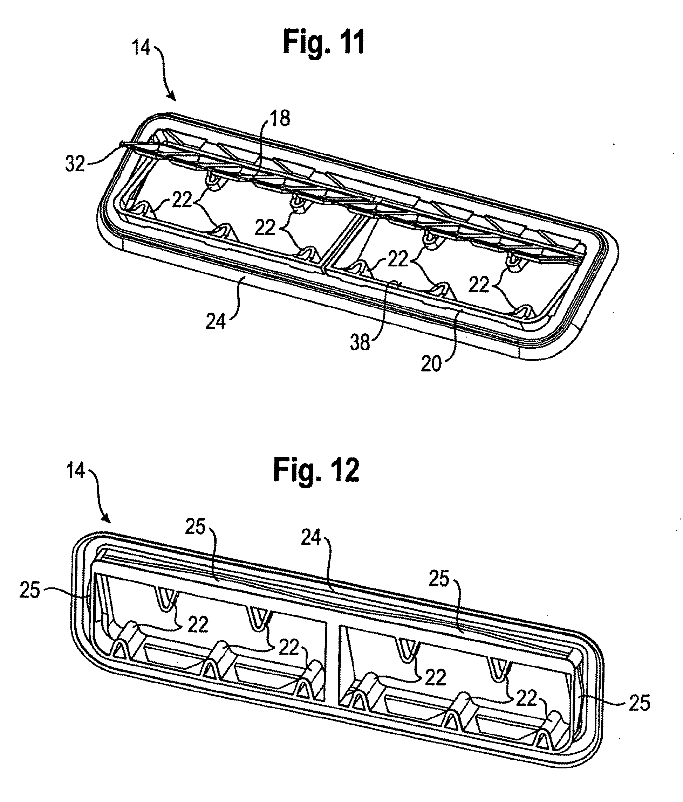

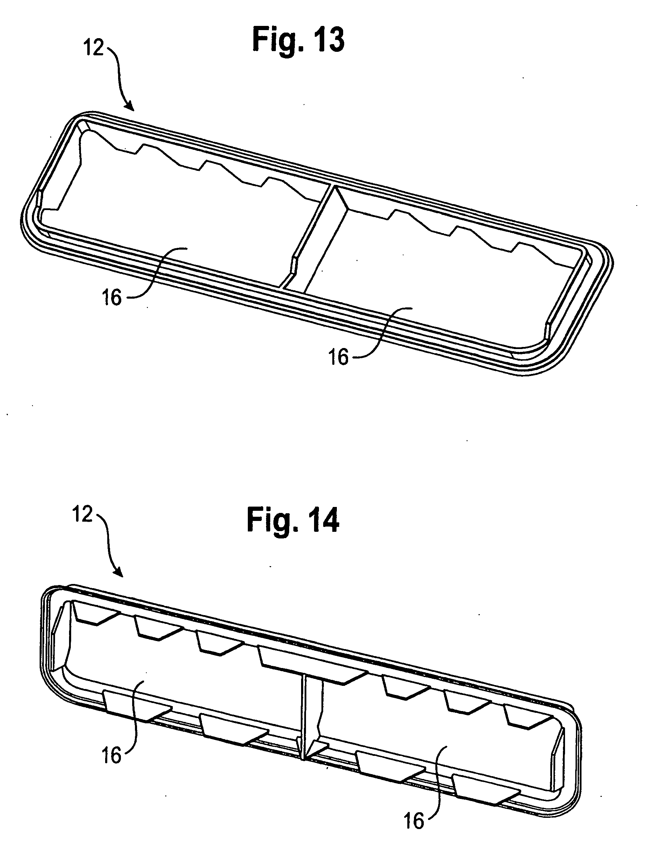

In den Figuren 9 bis 14 ist eine zweite Ausführungsform gezeigt.

Diese unterscheidet sich von der in den Figuren 1 bis 8 gezeigten Ausführungsform nur darin, daß sich die Verstärkungsrippen 30, die an der Rückschlagklappe 18 ausgebildet sind, nicht bis zum Rand 32 erstrecken. Die Verstärkungsrippen 30 enden in einem Abstand vom Rand 32. Die Fläche des Rückschlagklappenelementes 14, an der die Rückschlagklappe 18 im geschlossenen Zustand anliegt und die mit dem Bezugszeichen 38 versehen ist, ist deswegen eben (d.h. ohne Erhebungen oder Vertiefungen) ausgebildet.

## Patentansprüche

1. Entlüftungsvorrichtung mit
einem Rahmen (12) aus einer ersten Materialkomponente und
einem Rückschlagklappenelement (14) aus einer zweiten Materialkomponente, wobei die erste Materialkomponente härter ist als die zweite Materialkomponente,
**dadurch gekennzeichnet, daß** die Entlüftungsvorrichtung wenigstens eines der folgenden Merkmale aufweist:
a) das Rückschlagklappenelement (14) weist eine bewegliche Rückschlagklappe (18) auf, die so angeordnet ist, daß sie ausschließlich am Rückschlagklappenelement (14) anliegt;
a) die Entlüftungsvorrichtung (10) ist an einem Fahrzeugteil (28) anbringbar, wobei der Teil der Entlüftungsvorrichtung (10), der am Fahrzeugteil (28) angreift, Teil des Rückschlagklappenelementes (14) ist.

2. Entlüftungsvorrichtung nach Anspruch 1, **dadurch gekennzeichnet, daß** das Rückschlagklappenelement (14) Vorsprünge (22) aufweist, an denen die Rückschlagklappe (18) angreifen kann.

3. Entlüftungsvorrichtung nach Anspruch 2, **dadurch gekennzeichnet, daß** die Vorsprünge (22) über die Breite (B) des Rückschlagklappenelementes (14) verteilt sind.

4. Entlüftungsvorrichtung nach Anspruch 2 oder 3, **dadurch gekennzeichnet, daß** die Vorsprünge (22) im Querschnitt gesehen dreieckig sind.

5. Entlüftungsvorrichtung nach einem der vorhergehenden Ansprüche, **dadurch gekennzeichnet, daß** das Rückschlagklappenelement (14) wenigstens eine Lippe (24, 25) aufweiset, die der Anbringung des Rückschlagklappenelementes (14) am Fahrzeugteil (28) dient.

6. Entlüftungsvorrichtung nach Anspruch 5, **dadurch gekennzeichnet, daß** die Lippe (24) als Dichtlippe dient.

7. Entlüftungsvorrichtung nach einem der vorhergehenden Ansprüche, **dadurch gekennzeichnet, daß** die Rückschlagklappe (18) Verstärkungsrippen (30) aufweist, wobei sich die Verstärkungsrippen (30) in Längsrichtung (L) bis zu wenigstens einem Rand (32) der Rückschlagklappe (18) erstrecken.

8. Entlüftungsvorrichtung nach einem der Ansprüche 1 bis 6, **dadurch gekennzeichnet, daß** die Rückschlagklappe (18) Verstärkungsrippen (30) aufweist, wobei die Verstärkungsrippen (30), in Längsrichtung (L) gesehen, in einem Abstand von einem Rand (32) enden.

## Claims

1. A ventilation device, comprising
a frame (12) made of a first material component, and
a non-return flap element (14) made of a second material component,
the first material component being harder than the second material component,
**characterized in that** the ventilation device has at least one of the following features:
a) the non-return flap element (14) includes a movable non-return flap (18) which is arranged such that it rests exclusively against the non-return flap element (14);
b) the ventilation device (10) is adapted to be mounted to a vehicle part (28), with that part of the ventilation device (10) which engages the vehicle part (28) being part of the non-return flap element (14).

2. The ventilation device according to claim 1, **characterized in that** the non-return flap element (14) includes protrusions (22), which can be engaged by the non-return flap (18).

3. The ventilation device according to claim 2, **characterized in that** the protrusions (22) are distributed over the width (B) of the non-return flap element (14).

4. The ventilation device according to claim 2 or 3, **characterized in that** the protrusions (22) are triangular as viewed in cross-section.

5. The ventilation device according to any of the preceding claims, **characterized in that** the non-return flap element (14) includes at least one lip (24, 25), which serves to mount the non-return flap element (14) to the vehicle part (28).

6. The ventilation device according to claim 5, **characterized in that** the lip (24) serves as a sealing lip.

7. The ventilation device according to any of the preceding claims, **characterized in that** the non-return flap (18) includes reinforcement ribs (30), the reinforcement ribs (30) extending in the longitudinal direction (L) up to at least an edge (32) of the non-return flap (18).

8. The ventilation device according to any of claims 1 to 6, **characterized in that** the non-return flap (18) includes reinforcement ribs (30), the reinforcement ribs (30) ending at a distance from an edge (32) as viewed in the longitudinal direction (L).

## Revendications

1. Dispositif d'aération, présentant
un cadre (12) en un premier composant de matière, et
un élément (14) de clapet antiretour en un deuxième composant de matière, le premier composant de matière étant plus dur que le deuxième composant de matière,
**caractérisé en ce que** le dispositif d'aération présente au moins l'une des caractéristiques suivantes :
a) l'élément (14) de clapet antiretour comporte un clapet antiretour (18) mobile agencé de manière à être en appui uniquement sur l'élément de clapet antiretour (14) ;
b) le dispositif d'aération (10) peut être monté sur une pièce de véhicule (28), le tronçon du dispositif d'aération (10) qui s'engage sur la pièce de véhicule (28) faisant partie de l'élément (14) de clapet antiretour.

2. Dispositif d'aération selon la revendication 1, **caractérisé en ce que** l'élément (14) de clapet antiretour présente des saillies (22) sur lesquelles le clapet antiretour (18) peut s'engager.

3. Dispositif d'aération selon la revendication 2, **caractérisé en ce que** les saillies (22) sont réparties sur la largeur (B) de l'élément (14) de clapet antiretour.

4. Dispositif d'aération selon la revendication 2 ou 3, **caractérisé en ce que** vues selon la section transversale, les saillies (22) sont triangulaires.

5. Dispositif d'aération selon l'une des revendications précédentes, **caractérisé en ce que** l'élément (14) de clapet antiretour présente au moins une lèvre (24, 25) qui sert à fixer l'élément (14) de clapet antiretour à la pièce de véhicule (28).

6. Dispositif d'aération selon la revendication 5, **caractérisé en ce que** la lèvre (24) sert de lèvre d'étanchéité.

7. Dispositif d'aération selon l'une des revendications précédentes, **caractérisé en ce que** le clapet antiretour (18) présente des nervures de renforcement (30), les nervures de renforcement (30) s'étendant en direction longitudinale (L) jusqu'à au moins un bord (32) du clapet antiretour (18).

8. Dispositif d'aération selon l'une des revendications 1 à 6, **caractérisé en ce que** le clapet antiretour (18) présente des nervures de renforcement (30), les nervures de renforcement (30), vues en direction longitudinale (L), se terminant à une distance d'un bord (32).
